# FASCICULE DE BREVET EUROPEEN

(11) **EP 1 967 848 B1**
(45) Date de publication et mention de la délivrance du brevet: **07.12.2011**
(21) Numéro de dépôt: 08300041.4
(22) Date de dépôt: 22.01.2008
(51) Int. Cl.: G01N 25/08, G01N 25/10, G01N 25/14, G01N 33/28

(54) **Dispositif de décodage de plaques isolantes pour un appareil de distillation normalisé**
Dekodierungsvorrichtung von Isolierplatten für ein standardisiertes Destilliergerät
Device for decoding grids for a standard distilling device

(30) Priorité: 13.02.2007 FR 0753221
(43) Date de publication de la demande: 10.09.2008
(73) Titulaire: Instrumentation Scientifique de Laboratoire ISL, 14790 Verson (FR)
(72) Inventeur: Marie, Patrick, 14980 Rots (FR); Wunsch, Thomas, 97947 Grünsfeld (DE)
(74) Mandataire: Livet, Marie-José

(56) Documents cités:
- FR-A1- 2 410 818
- FR-A1- 2 815 413
- US-A- 3 364 731
- US-A- 4 250 739
- SPIEKSMA W: "Prediction of ASTM Method D86 Distillation of Gasolines and Naphtas according to the Fugacity-Filmmodel from Gas Chromatographic Detailed Hydrocarbon Analysis" JOURNAL OF CHROMATOGRAPHIC SCIENCE, PRESTON PUBLICATIONS, NILES, IL, US, vol. 36, no. 9, 1 septembre 1998 (1998-09-01), pages 467-475, XP002100180 ISSN: 0021-9665

## Description

La présente invention a pour objet un dispositif de décodage de plaques isolantes pour un appareil de distillation normalisé, notamment un appareil de distillation automatique sous pression atmosphérique d'échantillons liquides en particulier d'échantillons de produits pétroliers.

Un tel appareil de distillation permet d'effectuer la mesure des paramètres de distillation de ces échantillons en respectant une norme prédéfinie choisie parmi plusieurs normes possibles.

Il est connu que les caractéristiques de distillation des produits pétroliers sont représentatives des performances de ces produits ainsi que des risques qu'ils peuvent faire encourir à leurs utilisateurs.

La détermination de ces caractéristiques présente notamment une grande importance dans le cas de carburants destinés à l'industrie automobile ou à l'aviation où les problèmes liés à la sécurité sont primordiaux.

Ces caractéristiques sont en particulier des tables ou des courbes représentant le pourcentage d'un échantillon évaporé selon la température pendant une distillation, ou encore le volume du résidu et les pertes.

Les spécialistes peuvent déduire de ces caractéristiques quel sera le comportement d'un produit pétrolier donné dans une situation donnée et donc déterminer si ce produit peut ou non être utilisé en toute sécurité, ce de manière à obtenir des performances recherchées.

Dans ce contexte, les spécialistes ont édicté différentes normes d'essai qui définissent très précisément les conditions dans lesquelles doivent être obtenues de telles caractéristiques de distillation.

Par suite, pour donner des résultats exploitables, les distillations doivent être mises en oeuvre en respectant scrupuleusement ces normes.

Il existe actuellement sur le marché différents appareils de distillation automatique permettant d'effectuer la mesure des paramètres de distillation d'un échantillon inconnu en respectant une norme prédéfinie, choisie parmi plusieurs normes possibles auxquelles est adapté cet appareil de distillation.

Les appareils de distillation normalisés actuellement proposés sur le marché comportent en règle générale :
- un élément chauffant,
- une série de ballons de distillation correspondant respectivement à au moins l'une des normes possibles, la colonne de ces ballons pouvant être fermée par un bouchon étanche muni d'un thermomètre permettant de mesurer la température des vapeurs évaporées et pouvant être branchée sur un condenseur,
- une série de plaques isolantes perforées respectivement associées à différentes normes d'essai destinées à être interposées entre ce ballon et l'élément chauffant, dans une position déterminée,
- un cylindre collecteur permettant de recueillir le condensât et équipé d'organes de mesure de la quantité d'échantillon ainsi recueillie en fonction du temps, et
- des moyens de commande et de régulation permettant de commander et de faire varier dans le temps une grandeur de fonctionnement de l'élément chauffant, notamment la température ou la puissance électrique de cet élément de manière à obtenir des caractéristiques et/ou des courbes de distillation conformément à la norme prédéfinie choisie.

Pour effectuer la distillation d'un échantillon inconnu en utilisant un tel appareil, l'utilisateur doit tout d'abord effectuer le choix d'une norme puis introduire une quantité prédéterminée d'échantillon à analyser dans le ballon de distillation correspondant à cette norme.

Il doit ensuite monter le ballon ainsi rempli de l'échantillon dans l'appareil de distillation, en interposant entre l'élément chauffant et le ballon une plaque isolante équipée à sa partie médiane d'un orifice en règle générale circulaire.

Pour garantir que la distillation soit effectuée en respectant scrupuleusement la norme prédéfinie préalablement choisie, il est nécessaire d'interposer entre l'élément chauffant de l'appareil de distillation et le ballon renfermant l'échantillon à analyser la plaque isolante associée à la norme d'essai prédéfinie.

En effet, le montage dans l'appareil de distillation d'une plaque isolante non associée à cette norme prédéfinie entraîne une dénaturation des caractéristiques de distillation obtenues.

Les conséquences de telles erreurs sont préjudiciables pour tout essai de distillation.

La présente invention a pour objet de proposer un dispositif de décodage de plaques isolantes pour un appareil de distillation normalisé permettant d'exclure toute erreur au niveau du montage des plaques isolantes.

Selon l'invention un tel dispositif est caractérisé en ce qu'il comporte un ensemble de trous de décodage percés dans chacune des plaques isolantes et répartis sur sa surface selon un modèle spécifique à celle-ci, ainsi qu'un ensemble de capteurs de présence respectivement associés à ces trous de décodage et susceptibles d'émettre des signaux de détection représentatifs des plaques isolantes en réponse à un signal de décodage de façon à permettre de vérifier que l'on a effectivement interposé entre l'élément chauffant et le ballon de distillation la plaque isolante correspondant à la norme prédéfinie.

Selon une autre caractéristique de l'invention, chacun des capteurs de présence comporte une bascule sur laquelle est montée une tige de détection dont l'extrémité libre est susceptible de pénétrer dans le trou de décodage associé.

Cette bascule est mobile entre d'une part une position déployée ou position de repos dans laquelle l'extrémité libre de la tige de détection montée sur celle-ci pénètre dans le trou de décodage associé de sorte que le capteur puisse émettre un signal de détection représentatif de la présence de ce trou en réponse à un signal de décodage, et d'autre part une position rétractée ou position de détection d'absence de trou.

Le dispositif conforme à l'invention peut en outre avantageusement comporter des organes de guidage du déplacement des tiges de détection entre la position de repos et la position de détection.

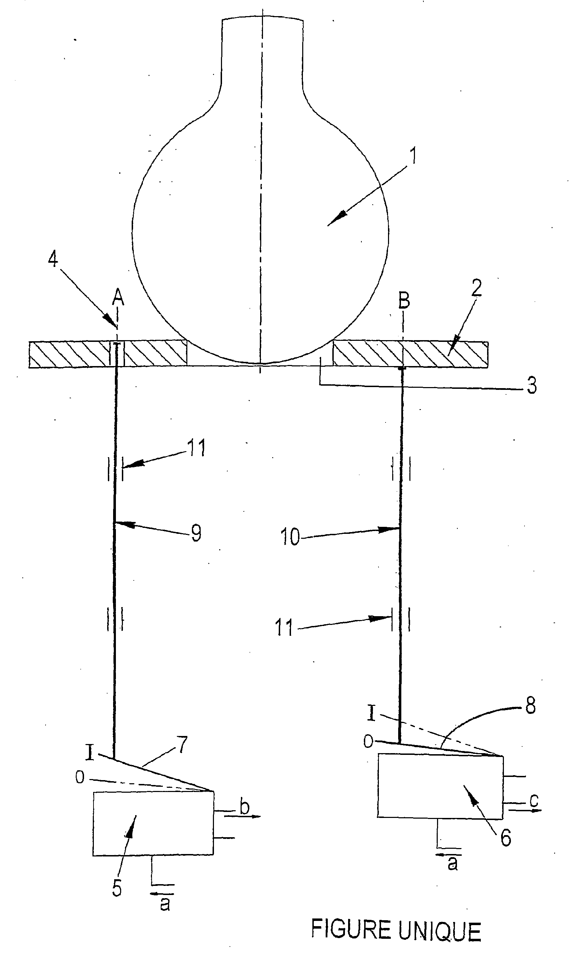

Les caractéristiques du dispositif de décodage de plaques isolantes qui fait l'objet de l'invention seront décrites plus en détail en se référant au dessin non limitatif annexé qui est une vue schématique de ce dispositif.

Selon l'exemple représenté sur la figure, le ballon de distillation 1 est positionné sur une plaque isolante 2 interposée entre celui-ci et l'élément chauffant de l'appareil de distillation qui n'est pas représenté.

La plaque isolante 2 comporte une perforation centrale 3 de forme circulaire dont la géométrie est adaptée au ballon de distillation 1 ainsi qu'un trou de décodage 4 percé de part et d'autre de sa surface et dont la position est spécifique à celle-ci.

L'appareil de distillation est par ailleurs équipé de deux capteurs de présence 5, 6 montés pour permettre de détecter la présence de trous de décodage dans deux positions schématisées sur la figure par les lettres A et B.

La plaque 2 comporte un trou 4 en position A mais ne comporte pas de trou en position B.

Chacun des capteurs de présence 5, 6 est équipé d'une bascule 7, 8 sur laquelle est fixée une tige de détection 9, 10 guidée en translation le long d'organes de guidage 11.

Les tiges de détection 9, 10 sont respectivement positionnées de sorte que leur extrémité libre soit située en regard des trous de décodage situés en position A ou en position B.

Les bascules 7, 8 sont mobiles entre deux positions, à savoir une position déployée ou position de repos I dans laquelle l'extrémité libre de la tige de détection associée 9, 10 pénètre dans un trou de décodage 4 de la plaque isolante 2 et une position rétractée ou position de détection d'absence de trou 0.

Dans l'exemple représenté sur la figure, la bascule 7 du capteur de présence 5 est en position de repos I et l'extrémité de la tige de détection 9 pénètre dans le trou de décodage 4 de la plaque isolante 2 situé en position A.

En revanche, la bascule 8 du capteur de présence 6 est en position de détection d'absence de trou 0 et est en fait bloquée dans cette position : en effet, la plaque isolante 2 n'est pas équipée d'un trou de décodage en position B, de sorte que l'extrémité libre de la tige de détection 10 est bloquée en butée contre la face inférieure de cette plaque isolante.

Les capteurs de présence 5, 6 sont équipés chacun, d'une part d'une entrée pour un signal de décodage schématisé par la flèche a et d'autre part de deux sorties pour des signaux de détection respectivement schématisés par les flèches b et c.

Les tiges de détection 9 et 10, quand elles ne se trouvent pas face à un trou en A ou B, actionnent les bascules associées 7 et 8 de la position repos I à la position rétractée 0, lors de la mise en place de la plaque 2 et du ballon 1.

L'émission d'un signal de détection b indique la présence d'un trou de décodage 4 dans la position associée (capteur de présence 5) alors que l'émission d'un signal de détection c indique l'absence de trou de décodage dans la position associée (capteur de présence 6).

Plus précisément et selon la figure, en réponse à un signal de décodage a, la bascule 7 dont la tige de détection 9 est située en regard d'un trou de décodage 4 situé en position A peut se déplacer dans la position de repos I, et le capteur de présence 5 émet en retour un signal de détection b.

En revanche, la bascule 8 dont la tige de détection 10 n'est pas située en regard d'un trou de décodage 4 situé en position B est bloquée en position de détection d'absence de trou 0 et le capteur de présence 6 émet en retour un signal de détection c.

Le dispositif de décodage correspondant à l'exemple représenté sur la figure permet de signaler l'absence de plaque isolante ainsi que la présence de trois types différents de plaques isolantes, à savoir :
1. une plaque isolante équipée d'un trou de décodage en position A mais ne comportant pas de trou de décodage en position B,
2. une plaque isolante ne comportant pas de trou de décodage en position A mais comportant un trou de décodage en position B, et
3. une plaque isolante ne comportant pas de trou de décodage ni en position A ni en position B.

En l'absence de plaque isolante, les capteurs de présence 5 et 6 émettent tous deux un signal de détection b représentatif du positionnement des bascules 7 et 8 en position I en réponse à un signal de décodage a.

En présence d'une plaque isolante du premier type, le capteur de présence 5 émet un signal de détection b alors que le capteur de présence 6 émet un signal de détection c en réponse à un signal de décodage a.

En présence d'une plaque isolante du second type, le capteur de présence 5 émet un signal de détection c alors que le capteur de présence 6 émet un signal de détection b en réponse à un signal de décodage a.

Enfin, en présence d'une plaque isolante du troisième type, les deux capteurs de présence 5 et 6 émettent un signal de détection c représentatif du positionnement des bascules 7 et 8 en position 0 en réponse à un signal de décodage a.

## Revendications

1. Dispositif de décodage de plaques isolantes pour un appareil de distillation normalisé, notamment un appareil de distillation automatique sous pression atmosphérique d'échantillons liquides en particulier d'échantillons de produits pétroliers, permettant d'effectuer la mesure des paramètres de distillation de ces échantillons en respectant une norme d'essai prédéfinie, choisie parmi plusieurs normes possibles, cet appareil de distillation normalisé comportant :
- un élément chauffant,
- une série de ballons de distillation correspondant respectivement à au moins l'une des normes possibles, la colonne de ces ballons pouvant être fermée par un bouchon étanche muni d'un thermomètre permettant de mesurer la température des vapeurs évaporées et pouvant être branchée sur un condenseur,
- une série de plaques isolantes perforées respectivement associées à différentes normes d'essai destinées à être interposées entre ce ballon et l'élément chauffant, dans une position déterminée,
- un cylindre collecteur permettant de recueillir le condensât et équipé d'organes de mesure de la quantité d'échantillon ainsi recueillie en fonction du temps, et
- des moyens de commande et de régulation permettant de commander et de faire varier dans le temps une grandeur de fonctionnement de l'élément chauffant, notamment la température ou la puissance électrique de cet élément de manière à obtenir des caractéristiques et/ou des courbes de distillation conformément à la norme prédéfinie choisie,
**caractérisé en ce qu'**
il comporte un ensemble de trous de décodage (4) percés dans chacune des plaques isolantes (2) et répartis sur sa surface selon un modèle spécifique à celle-ci ainsi qu'un ensemble de capteurs de présence (5, 6) respectivement associés à ces trous de décodage (4) et susceptibles d'émettre des signaux de détection b, c représentatifs des plaques isolantes (2) en réponse à un signal de décodage a de façon à permettre de vérifier que l'on a interposé entre l'élément chauffant et le ballon de distillation (1) la plaque isolante correspondant à la norme d'essai prédéfinie.

2. Dispositif selon la revendication 1,
**caractérisé en ce que**
chacun des capteurs de présence (5, 6) comporte une bascule (7, 8) sur laquelle est montée une tige de détection (9, 10) dont l'extrémité libre est susceptible de pénétrer dans le trou de décodage (4) associé, cette bascule (7, 8) étant mobile entre d'une part une position déployée ou position de repos I dans laquelle l'extrémité libre de la tige de détection (9, 10) montée sur celle-ci pénètre dans le trou de décodage (4) associé de sorte que le capteur (5, 6) puisse émettre un signal de détection représentatif de la présence de ce trou de détection (4) en réponse à un signal de décodage et d'autre part une position rétractée ou position de détection d'absence de trou O.

3. Dispositif selon la revendication 2,
**caractérisé en ce qu'**
il comporte des organes de guidage (11) du déplacement des tiges de détection (9, 10) entre la position de repos I et la position de détection d'absence de trou O.

## Claims

1. Device for decoding isolating plates for a standardised distillation device, particularly an automatic distillation device under atmospheric pressure for liquid samples, in particular samples of petroleum products, allowing the measurement of the distillation parameters of those samples to be carried out in accordance with a predefined test standard which is selected from a plurality of possible standards, that standardised distillation device comprising:
- a heating element,
- a series of distillation flasks which correspond to at least one of the possible standards, respectively, the column of those flasks being able to be closed by a sealed plug which is provided with a thermometer which allows the temperature of the evaporated vapours to be measured and which can be connected to a condensor,
- a series of perforated isolating plates which are associated with different test standards, respectively, and which are intended to be interposed between that flask and the heating element in a predetermined position,
- a collection cylinder which allows the condensate to be collected and which is provided with members for measuring the quantity of sample collected in that manner as a function of time and
- control and adjustment means which allow control and variation over time of an operating variable for the heating element, in particular the temperature or the electric power of that element, so as to obtain distillation characteristics and/or lines in accordance with the selected predefined standard,
**characterised in that**
it comprises an assembly of decoding holes (4) which are formed in each of the isolating plates (2) and which are distributed over the surface thereof in accordance with a pattern specific thereto and an assembly of presence sensors (5, 6) which are associated with those decoding holes (4) and which are capable of transmitting detection signals b, c, respectively, which are representative of the isolating plates (2) in response to a decoding signal a so as to allow verification that the isolating plate corresponding to the predefined test standard has been interposed between the heating element and the distillation flask (1).

2. Device according to claim 1,
**characterised in that**
each of the presence sensors (5, 6) comprises a pivot (7, 8), on which there is mounted a detection bar (9, 10) whose free end is capable of being introduced into the associated decoding hole (4), that pivot (7, 8) being movable between, on the one hand, a deployed position or rest position I, in which the free end of the detection bar (9, 10) mounted thereon is introduced into the associated decoding hole (4) so that the sensor (5, 6) can transmit a detection signal which is representative of the presence of that detection hole (4) in response to a decoding signal and, on the other hand, a retracted position or position for detecting the absence of a hole 0.

3. Device according to claim 2,
**characterised in that**
it comprises members (11) for guiding the movement of the detection bars (9, 10) between the rest position I and the position for detecting the absence of a hole 0.

## Patentansprüche

1. Dekodierungsvorrichtung für Isolierplatten für ein genormtes Destilliergerät, insbesondere ein Gerät zur automatischen Destillation von flüssige Proben unter atmosphärischem Druck, insbesondere von Proben von Mineralölprodukten, mit dem die Messung der Destillationsparameter dieser Proben unter Beachtung einer vorgegebenen, aus mehreren möglichen Normen ausgewählten Prüfnorm durchgeführt werden kann, wobei dieses genormte Destillationsgerät Folgende umfasst;
- ein Heizelement,
- einen Satz Destillierkolben, die jeweils wenigstens einer der möglichen Normen entsprechen, wobei die Kolonne dieser Kolben durch einen dicht schließenden Stopfen verschließbar ist, der mit einem Thermometer versehen ist, mit dem die Temperatur der sich verflüchtigenden Dämpfe messbar ist, und die an einen Kondensator angeschlossen werden kann,
- einen Satz durchlöcherter Isolierplatten, die jeweils verschiedenen Prüfnormen zugeordnet werden können und dazu vorgesehen sind, an einer bestimmten Stelle zwischen diesem Kolben und dem Heizelement angeordnet zu werden,
- einen Auffangbehälter, mit dem das Kondensat aufgefangen werden kann und der mit Mitteln zum Messen der so in Abhängigkeit von der Zeit aufgefangenen Probenmenge versehen ist, und
- Mittel zum Steuern und Regeln, mit denen eine Betriebsgröße des Heizelements im Zeitverlauf überwacht und verändert werden kann, insbesondere die Temperatur oder die elektrische Leistung dieses Elements, um der ausgewählten vorgegebenen Norm entsprechende Kennwerte und/oder Destillationskurven zu erhalten,
**dadurch gekennzeichnet,**
**dass** die Vorrichtung eine Anzahl Dekodierungslöcher (4) aufweist, die in jede der Isolierplatten (2) gebohrt und bei jeder davon nach einem jeweils speziellen Muster auf ihrer Oberfläche verteilt sind, sowie eine Anzahl ein Vorhandensein erfassende Sensoren (5, 6), die jeweils diesen Dekodierungslöchern (4) zugeordnet und in der Lage sind, als Antwort auf ein Dekodierungssignal a die Isolierplatten (2) repräsentierende Nachweissignale b, c zu senden, so dass nachgeprüft werden kann, ob die zwischen dem Heizelement und dem Destillierkolben (1) angeordnete Isolierplatte der vorgegebenen Prüfnorm entspricht.

2. Vorrichtung nach Anspruch 1, **dadurch gekennzeichnet, dass** jeder der Vorhandenseinsensoren (5, 6) eine Wippe (7, 8) umfasst, auf der eine Nachweisstange (9, 10) angebracht ist, deren freies Ende in der Lage ist, in das zugehörige Dekodierungsloch (4) einzudringen, wobei diese Wippe (7, 8) zwischen einerseits einer angehobenen Stellung oder Ruhestellung I, in der das freie Ende der auf ihr angebrachten Nachweisstange (9, 10) in das zugehörige Dekodierungsloch (4) eindringt, so dass der Sensor (5, 6) ein für das Vorhandensein dieses Nachweislochs (4) typisches Nachweissignal als Antwort auf ein Dekodierungssignal senden kann, und andererseits einer abgesenkten Stellung oder Stellung zum Feststellen des Fehlens eines Loches 0 bewegbar ist.

3. Vorrichtung nach Anspruch 2, **dadurch gekennzeichnet, dass** sie Führungsmittel (11) für das Verschieben der Nachweisstangen (9, 10) zwischen der Ruhestellung I und der Nachweisstellung 0 für das Fehlens eines Lochs aufweist.
